(19)

Europäisches
Patentamt
European
Patent Office
Office européen
des brevets

(11) **EP 4 325 780 A1**

(12)

# EUROPEAN PATENT APPLICATION
published in accordance with Art. 153(4) EPC

(43) Date of publication:
**21.02.2024 Bulletin 2024/08**

(21) Application number: **22787491.4**

(22) Date of filing: **11.04.2022**

(51) International Patent Classification (IPC):
**H04L 25/02** (2006.01)

(52) Cooperative Patent Classification (CPC):
**H04L 1/00; H04L 25/02; H04L 27/20; H04L 27/26**

(86) International application number:
**PCT/CN2022/086145**

(87) International publication number:
**WO 2022/218265 (20.10.2022 Gazette 2022/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.04.2021 CN 202110397056**

(71) Applicant: **ZTE Corporation
Shenzhen, Guangdong 518057 (CN)**

(72) Inventors:
• **YUAN, Zhifeng
Shenzhen, Guangdong 518057 (CN)**

• **XIN, Yu
Shenzhen, Guangdong 518057 (CN)**
• **YU, Guanghui
Shenzhen, Guangdong 518057 (CN)**
• **HU, Liujun
Shenzhen, Guangdong 518057 (CN)**
• **XU, Jin
Shenzhen, Guangdong 518057 (CN)**

(74) Representative: **Savi, Massimiliano et al
Notarbartolo & Gervasi S.p.A.
Viale Achille Papa, 30
20149 Milano (IT)**

(54) **SYMBOL SENDING METHOD, SYMBOL RECEIVING METHOD, SENDING DEVICE, RECEIVING DEVICE, AND STORAGE MEDIUM**

(57)      A symbol sending method, a symbol receiving method, a sending device, a receiving device, and a storage medium. The symbol sending method comprises: determining N+1 transmission symbols, i.e., s0, s1, s2, ... , and sN, according to a reference symbol and (M+1)*N bits, wherein 0, 1, 2, ... , and N are indexes of the transmission symbols, s0 is the reference symbol, the transmission symbol having an index n is determined according to the amplitude and phase of the transmission symbol having an index n-1 and M+1 bits, M is an integer greater than or equal to 1, N is an integer greater than or equal to 1, $1 \leq n \leq N$, and n is an integer (110); and sending the N+1 transmission symbols (120).

Determine N+1 transmission symbols of $S_0, S_1, S_2, ... S_N$, according to a reference symbol and (M+1)*N bits, where 0, 1, 2,.., N denote indices of the transmission symbols, $S_0$ denotes the reference symbol, and the transmission symbol indexed n is determined according to the amplitude and the phase of the transmission symbol indexed n-1, and M+1 bits; and M is an integer greater than or equal to 1, N is an integer greater than or equal to 1, $1 \leq n \leq N$, n is an integer — 110

Transmit the N+1 transmission symbols — 120

FIG. 1

**Description**

**CROSS-REFERENCE TO RELATED APPLICATION**

This application is filed on the basis of the Chinese patent application No. 202110397056.5 filed April 13, 2021, and claims priority of the Chinese patent application, the entire contents of which are incorporated herein by reference.

**TECHNICAL FIELD**

The present disclosure relates to the field of data modulation, and in particular to a method and a device for symbol transmission, a method and a device for symbol reception, and a storage medium.

**BACKGROUND**

In wireless technique, Differential Phase Shift Key (DPSK) refers to the utilization of the phase difference between two adjacent symbols to carry the data to be transmitted, which can realize the effective transmission of data in the presence of phase noise, frequency bias or time bias. The receiver can also employ the phase difference between the modulated symbols to demodulate and recover the transmitted data. However, it is important to improve spectrum utilization in the sole utilization of the phase difference to carry the information to be transmitted.

**SUMMARY**

The present disclosure provides a method and a device for symbol transmission, a method and a device for symbol reception, and a storage medium, for improving spectral utilization of data transmission.

An embodiment of the present disclosure provides a method for symbol transmission, which includes, determining N+1 transmission symbols of $S_0$, $S_1$, $S_2$ ,..., $S_N$ according to a reference symbol and (M+1)*N bits, where 0, 1, 2,.., N denote indices of the transmission symbols, $S_0$ is the reference symbol, and the transmission symbol indexed n is determined according to the amplitude and the phase of the transmission symbol indexed n-1 and M+1 bits; and M is an integer greater than or equal to 1, N is an integer greater than or equal to 1, $1 \leq n \leq N$, n is an integer; and transmitting the N+1 transmission symbols.

An embodiment of the present disclosure provides a method for symbol reception, which includes, receiving N+1 transmission symbols of $S_0$, $S_1$, $S_2$ ,..., $S_N$, where 0, 1, 2,.., N denote indices of the transmission symbols, $S_0$ is the reference symbol, and the transmission symbol indexed n is determined according to the amplitude and the phase of the transmission symbol indexed n-1 and M+1 bits; and M is an integer greater than or equal to 1, N is an integer greater than or equal to 1, $1 \leq n \leq N$, n is an integer; and demodulating the N+1 transmission symbols to obtain (M+1)*N bits.

An embodiment of the present disclosure further provides a method for symbol transmission, which includes determining a transmission symbol, where at least one transmission symbol indexed n is determined according to the amplitude and the phase of transmission symbols indexed non n, and M+1 bits, M is an integer greater than or equal to 1, N is an integer greater than or equal to 1, and n is an integer; and transmitting the transmission symbol.

An embodiment of the present disclosure further provides a method for symbol reception, which includes, receiving a transmission symbol, where at least one transmission symbol indexed n is determined according to the amplitude and the phase of transmission symbols indexed non n, and M+1 bits, M is an integer greater than or equal to 1, N is an integer greater than or equal to 1, and n is an integer; and demodulating the transmission symbol to obtain a plurality of bits for determining transmission symbol including the M+1 bits.

An embodiment of the present disclosure provides a transmitting apparatus, which includes a memory, a processor, and a computer program stored in the memory and executable by the processor which, when is executed by the processor, causes the processor to carry out the method for symbol transmission in any one of the embodiments as described above.

An embodiment of the present disclosure provides a receiving apparatus, which includes a memory, a processor, and a computer program stored in the memory and executable by the processor which, when is executed by the processor, causes the processor to carry out the method for symbol reception in any one of the embodiments as described above.

An embodiment of the present disclosure provides a computer-readable storage medium storing a computer program which, when executed by a processor, causes the processor to carry out the method described in any one embodiment as described above.

**BRIEF DESCRIPTION OF DRAWINGS**

FIG. 1 depicts a flowchart showing a method for symbol transmission according to an embodiment of the present disclosure;

FIG. 2 depicts a schematic diagram showing a Gray mapping according to an embodiment of the present disclosure;

FIG. 3 depicts a schematic diagram showing an embodiment where the reference symbols of two sets of bits are identical;

FIG. 4 depicts a schematic diagram showing an embodiment where the reference symbols of each set of bits are different;

FIG. 5 depicts a flowchart showing a method for symbol reception according to an embodiment of the present disclosure;

FIG. 6 depicts a flowchart showing another method for symbol transmission according to an embodiment of the present disclosure;

FIG. 7 depicts a flowchart showing another method for symbol reception according to an embodiment of the present disclosure;

FIG. 8 depicts a schematic diagram showing a device for symbol transmission according to an embodiment of the present disclosure;

FIG. 9 depicts a schematic diagram showing a device for symbol reception according to an embodiment of the present disclosure;

FIG. 10 depicts a schematic diagram showing another device for symbol transmission according to an embodiment of the present disclosure;

FIG. 11 depicts a schematic diagram showing another device for symbol reception according to an embodiment of the present disclosure;

FIG. 12 depicts a schematic diagram showing a transmitting apparatus according to an embodiment of the present disclosure; and

FIG. 13 depicts a schematic diagram showing a receiving apparatus according to an embodiment of the present disclosure.

## DETAILED DESCRIPTION

Some embodiments of the present disclosure will be further illustrated with reference to the drawings. It should be understood that the embodiments described here are illustrative but not limiting to the present disclosure. It should be noted that various embodiments in the present disclosure and the features in the embodiments can be combined with each other without conflict. In addition, it should be noted that, for the convenience of description, only some parts related to the present disclosure, but not all structures, are shown in the drawings.

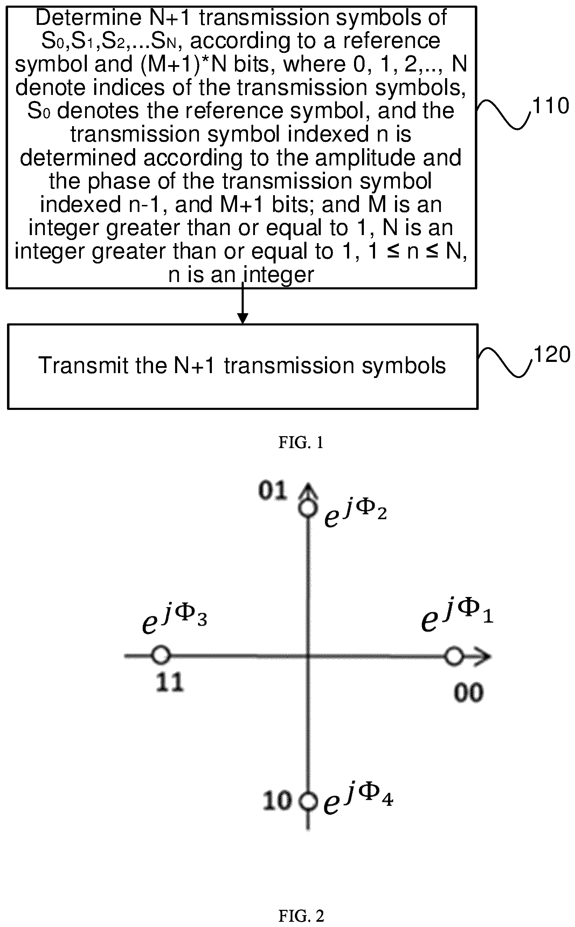

An embodiment of the present disclosure provides a method for symbol transmission. The method can be applied to a transmitting apparatus or a transmitting end, in which bits of information is carried by means of the phase and amplitude differences of two symbols, thus improving the spectral efficiency. FIG. 1 depicts a flowchart showing a method for symbol transmission according to an embodiment of the present disclosure. As shown in FIG. 1, the method includes operations 110 and 120.

At operation 110, N+1 transmission symbols of $S_0$, $S_1$, $S_2$ ,...., $S_N$ are determined according to a reference symbol and $(M+1)*N$ bits, where 0, 1, 2,.., N denote the indices of the transmission symbols, $S_0$ is the reference symbol, and the transmission symbol indexed n is determined according to the amplitude and the phase of the transmission symbol indexed n-1 and M+1 bits; and M is an integer greater than or equal to 1, N is an integer greater than or equal to 1, $1 \leq n \leq N$, n is an integer .

At operation 120, the N+1 transmission symbols are transmitted.

In this embodiment, the N+1 transmission symbols are denoted as $S_0$, $S_1$, $S_2$ ,....,$S_N$; where the transmission symbol indexed 0 is the reference symbol, $S_0$ is independent from $S_1$, $S_2$ ,..., $S_N$; $S_0$ may be a symbol with a preset amplitude and a preset phase; and $S_1$, $S_2$ ,...., $S_N$ are generated by the (M+1)*N bits. The (M+1)*N bits are bits for subsequent transmission. Those bits are typically (M+1)*N bits from the channel error correction coding and Cyclic Redundancy Check (CRC) coding bits of bits for subsequent transmission.

Starting from the transmission symbol indexed 1, each transmission symbol is determined according to the amplitude and the phase of the preceding transmission symbol and M+1 bits. The amplitude variation and the phase difference component of a transmission symbol relative to the preceding transmission symbol can be determined by every set of M+1 bits based on the reference symbols, so a total of N transmission symbols can be determined by (M+1)*N bits, i.e., N sets of (M+1) bits. The N+1 transmission symbols that are transmitted eventually carry (M+1)*N bits of information.

In an embodiment, operation 110 includes operations 112 through 118.

At operation 112, the transmission symbol indexed 0, $S_0$ is determined.

At operation 114, the phase of the transmission symbol indexed n is determined according to the phase of the transmission symbol indexed n-1 and M bits.

At operation 116, the amplitude of the transmission symbol indexed n is determined according to the amplitude of the transmission symbol indexed n-1 and 1 bit.

At operation 118, the transmission symbol indexed n is determined according to the phase and the amplitude of the transmission symbol indexed n.

In this embodiment, M*N bits of the (M+1)*N bits are employed to determine the phase difference component of N transmission symbols, while the remaining N bits are employed to determine the amplitude variation of the N transmission symbols. It is possible to determine the phase difference component and amplitude difference of a transmission symbol with respect to the preceding transmission symbol adjacent to the transmission symbol by every set of M+1 bits.

In an embodiment, operation 112 includes, generating a corresponding real number according to the M bits; and adding the real number with the phase of the transmission symbol indexed n-1 to obtain the phase of the transmission symbol indexed n.

In this embodiment, it is necessary to determine the transmission symbol indexed n by M+1 bits. For the phase of the transmission symbol indexed n, the phase difference component is determined according to M bits from the M+1 bits, and the phase of the transmission symbol indexed n can be obtained by the sum of the phase difference component and the phase of the transmission symbol indexed n-1.

Due to the fact that $\exp(j*(a + 2\pi)) = \exp(j*a)$, the value of a complex number remains unchanged with the phase increasing by a period of $2\pi$, which means the phase moves forward by one period. Therefore, the phase of the transmission symbol indexed n can be obtained by adding this phase difference component to the phase of the transmission symbol indexed n-1. Further processing is also possible: if the sum exceeds the range of 0-2 $\pi$, $k * 2\pi$ can be added to the result, where k is a positive or a negative integer, such that the result falls within the range of 0-$2\pi$.

On the whole, M*N bits from the (M+1)*N bits are employed to determine the phase difference components of N transmission symbols, in which a real number is generated by every set of M bits, and a total of N real numbers, $\varphi_1$, $\varphi_2$ ,...., $\varphi_N$ are thus generated, with each real number corresponding to a phase difference component. Within the N transmission symbols, $S_1$, $S_2$ ,...., $S_N$, the phase $\theta_n$ of the transmission symbol indexed n, $s_n$ is equal to the sum of phase $\theta_{n-1}$ of the transmission symbol indexed n-1, and $\varphi_n$, where $1 \leq n \leq N$.

In an embodiment, in response to the 1 bit for determining the amplitude of the transmission symbol indexed n being a first preset value, the amplitude of the transmission symbol indexed n is determined as being identical with that of the transmission symbol indexed n-1; and in response to the 1 bit for determining the amplitude of the transmission symbol indexed n being a second preset value, the amplitude of the transmission symbol indexed n is determined as being different from that of the transmission symbol indexed n-1; where, there are two types of amplitudes of the transmission symbols.

In this embodiment, the transmission symbol indexed n is determined according to a set of M+1 bits. The amplitude difference of the transmission symbol indexed n with respect to the transmission symbol indexed n-1 can be determined according to 1 bit from the set of M+1 bits that is independent from the M bits for determining phase difference component. The two types of amplitudes for the transmission symbols are denoted as $A_b$ and $A_s$ respectively. In particular, in case the value of 1 bit is a first preset value (such as 0), the amplitude does not change, and thus the amplitude of the transmission symbol indexed n is identical with that of the transmission symbol indexed n-1. If the value of 1 bit is a second preset value (such as 1), the amplitude changes, and thus the amplitude of the transmission symbol indexed n is different from that of the transmission symbol indexed n-1. In this case, the amplitude difference is only limited by the amplitude difference indicated by the 1 bit, that is, the 1 bit (either 1 or 0) indicates the amplitude difference of two adjacent transmission symbols.

On the whole, N bits from the (M+1)*N bits are intended to determine the amplitudes of N transmission symbols, where each bit of the N bits is indicative of an amplitude difference (zero (0) indicates an absence of difference, and non-zero indicates a presence of difference) of a transmission symbol with respect to a preceding transmission symbol.

In particular, the amplitude $a_n$ of a transmission symbol indexed n $s_n$ is jointly determined by the n-th bit (denoted as $b_n$) from the N bits and the amplitude $a_{n-1}$ of a transmission symbol indexed n-1 $S_{n-1}$.

For example, the amplitude of the transmission symbol can be determined according to method one, i.e., if $b_n$ =0, and $a_{n-1}$ =$A_b$, then $a_n$ =$A_b$; if $b_n$ =0, and $a_{n-1}$ =$A_s$, then $a_n$ =$A_s$; if $b_n$ =1, and $a_{n-1}$ =$A_b$, then $a_n$ =$A_s$; or if $b_n$ =1, and $a_{n-1}$ =$A_s$, then $a_n$ =$A_b$.

The meaning of this method for amplitude determination is that if bit $b_n$ is 0, it means that the amplitude of the transmission symbol indexed n is unchanged with respect to that of the transmission symbol indexed n-1. If bit $b_n$ is "1", it means that the amplitude of the transmission symbol indexed n changes with respect to that of the transmission symbol indexed n-1.

Alternatively, the amplitude of the transmission symbol can be determined according to the method two.

If $b_n$ =0, and $a_{n-1}$ =$A_b$, then $a_n$ =$A_s$; or if $b_n$ =0, and $a_{n-1}$ =$A_s$, then $a_n$ =$A_b$. If $b_n$ =1, and $a_{n-1}$ =$A_b$, then $a_n$ =$A_b$; if $b_n$ =1and $a_{n-1}$ =$A_s$, then $a_n$ =$A_s$.

The meaning of this method for amplitude determination is that if bit $b_n$ is 1, it means that the amplitude of the transmission symbol indexed n is unchanged with respect to that of the transmission symbol indexed n-1. If bit $b_n$ is 0, it means that the amplitude of the transmission symbol indexed n changes with respect to that of the transmission symbol indexed n-1.

The method set forth in this embodiment carry one more bit of information by means of the amplitude difference of two symbols based on phase difference modulation, thus improving the spectral efficiency. This method can be understood as a further amplitude differential modulation on the symbol of phase differential modulation, which can be understood as "DPSK of amplitude differential modulation" or a dual-modulation, "phase and amplitude differential modulations".

The process of generation of $S_1$, $S_2$ ,...., $S_N$ can be expressed by the equation $s_n = a_n * exp(j*(\varphi_n +\theta_{n-1}))$, where $1 < n < N$, $exp(x)=e^x$ is an exponential function, i.e., $exp(j*\theta_n)=e^{j*\theta_n}$ · "u*v" or "uv" denotes that the number "u" multiplies number "v", and j is equal to $\sqrt{-1}$ . $a_n$ is determined according to the method one or method two described above.

It should be noted that during the generation of the N+1 transmission symbols in this embodiment, one more bit of information can be carried based on the phase difference, and according to the information on whether the amplitude of adjacent transmission symbols change. For example, for the 12 bits for transmission, if only phase difference is applied to generate a real number for every 3 bits, a total of 4 real numbers or 4 phase difference components can be generated. Then S1, S2, S3, S4 can be successively generated based on the preset S0. In other words, 5 transmission symbols are needed to carry the 12-bit information. In contrast, if amplitude difference is employed in addition to the phase difference, more information can be carried. In particular, for every 4 bits, the first 3 bits can generate a real number which corresponds to a phase difference component. The real number is utilized to determine the phase difference component of the currently generated transmission symbol with respect to the preceding transmission symbol. It is feasible to determine as to whether the amplitude of the current generated transmission symbol has changed with respect to the amplitude of the preceding transmission symbol based on whether the last bit of the 4 bits is "0" or "1". As such, the currently generated transmission symbol can carry 4 bits of information. As a result, S1, S2, S3 are sequentially generated based on the preset S0, such that 4 transmission symbols can carry 12 bits of information. Therefore, the spectral efficiency is improved by carrying more bits with fewer transmission symbols.

In an embodiment, the method further includes operation 100.

At operation 100, the mapping relation between a sequence of M bits and $2^M$ real numbers is determined, where the mapping relation satisfies the principle that only one bit of the two groups of bit sequences of M bits corresponds to the nearest two real numbers changes.

In this embodiment, N real numbers $\varphi_1$ , $\varphi_2$ ,..., $\varphi_N$ are generated by means of M * N bits, through the process in which, M * N bits are divided into N sets, with each set consisting of M bits. The n th set of M bits generates a real number as the phase difference component $\varphi_n$ of the transmission symbol indexed n. Since M bits can have $2^M$ different values, the M bits can generate $2^M$ real numbers, with only one of them being utilized as $\varphi_n$. The transmitting end can employ a table to determine the mapping relation between the M bits and real numbers.

Table 1 shows the mapping of M bits and $2^M$ real numbers. As shown, Table 1 contains $2^M$ rows and 2 columns. The $2^M$ rows in the first column contains all values of the M bits (also known as M-long bit sequences, $b_1$ ,$b_2$,...,$b_M$), while the $2^M$ rows in the second column contain real numbers corresponding to various values. If the M bits of the nth set are $b_{n,1}^\varphi,b_{n,2}^\varphi,...,b_{n,M}^\varphi$ , then the row with $b_{n,1}^\varphi,b_{n,2}^\varphi,...,b_{n,M}^\varphi = b_1 ,b_2,....,b_M$ can be found in the table, and the real number in the second column of that row can be taken as $\varphi_n$. It can be understood that the rows and columns of Table 1 can be interchanged to have a transposed table with 2 rows and $2^M$ columns. In addition, the mapping relationship between M bits and $2^M$ real numbers can also be stored in some forms other than the table.

Table 1-Mapping between M bits and $2^M$ real numbers

| M bits $b_1, b_2,...,b_M$ | Corresponding $2^M$ real numbers |
|---|---|
| 00...00 | $\Phi_1$ |
| 00...01 | $\Phi_2$ |
| 00...11 | $\Phi_3$ |
| 00...10 | $\Phi_4$ |
| ...... | ...... |
| 11...11 | $\Phi_{2M}$ |

In this embodiment, the mapping relation between the M bits and $2^M$ real numbers satisfies the Gray mapping. The transmitting end employs each set of M bit to determine a phase difference component. And the receiving end thus can recover the corresponding M bits based on the phase difference component of two adjacent transmission symbols. The M bits and $2^M$ real numbers satisfy Gray mapping in which only one bit of the two groups of bit sequences of M bits corresponding to the nearest two real numbers changes, to ensure the optimal demodulation performance at the receiving end and reduce the bit error rate of demodulation at the receiving end.

FIG. 2 depicts a schematic diagram showing a Gray mapping according to an embodiment of the present disclosure. As shown in FIG. 2, taking M=2 as an example, $\Phi_1$, $\Phi_2$, $\Phi_3$, $\Phi_4$ stand for four phase difference components: 0, $\pi/2$, $\pi$, $3\pi/2$, and each phase difference component corresponds to a value of two bits. In FIG. 2, only one bit in each pair of bit sequences corresponding to the nearest two points changes. In this case, if the transmission were affected by noise or other interference, the receiving end may misjudge the received transmission symbol as another symbol at the point close to received transmission symbol. In the case that Gray mapping is employed, a misjudgment will cause only one bit error, the bit error rate is thus reduced.

For the values of M bits in the first column of Table 1 (where only 1 bit in adjacent values changes), if the $2^M$ real numbers, $\Phi_1$, $\Phi_2$, ..., $\Phi_{2M}$ in the second column are arranged in descending order by the value from top to bottom (it can be arranged either descending or ascending), then the Gray mapping is met.

Several examples are provided below illustrating the mapping relationship between M bits and $2^M$ real numbers.

Table 2 shows the mapping of M=1 bit and $2^M$ =2 real numbers. As shown in Table 2, if the one bit is "0", it indicates that the phase of the currently generated transmission symbol is identical to the phase of the preceding transmission symbol. Alternatively, if the one bit is "1", it is indicated that the phase of the currently generated transmission symbol is the sum of the phase of the preceding transmission symbol and $\pi$, where $\pi$ represents Pi.

Table 2 Mapping between M=1 bit and $2^M$=2 real numbers

| 0 | 0 |
|---|---|
| 1 | $\pi$ |

Table 3 shows another mapping between M=1 bit and $2^M$ =2 real numbers. As shown in Table 3, if the one (1) bit is 0, it indicates that the phase of the currently generated transmission symbol equals the phase of the preceding transmission symbol minus $\pi/2$. Alternatively, if the one bit is 1, it is indicated that the phase of the currently generated transmission symbol is the sum of the phase of the preceding transmission symbol and $\pi/2$, where $\pi$ represents Pi.

Table 3 Mapping between M=1 bit and $2^M$=2 real numbers

| 0 | $-\pi/2$ |
|---|---|
| 1 | $\pi/2$ |

Table 4 shows the mapping of M=2 bit and $2^M$ =4 real numbers. As shown in Table 4, if the two (2) bits are "00", it is indicated that the phase of the currently generated transmission symbol is identical to the phase of the preceding transmission symbol. Alternatively, if the two (2) bits are "01", it is indicated that the phase of the currently generated transmission symbol is the sum of the phase of the preceding transmission symbol and $\pi/2$. Alternatively, if the two (2) bits are "11", it is indicated that the phase of the currently generated transmission symbol is the sum of the phase of the preceding transmission symbol and $\pi$. Alternatively, if the two (2) bits are "10", it is indicated that the phase of the currently generated transmission symbol is the sum of the phase of the preceding transmission symbol and $3\pi/2$, where $\pi$ represents Pi.

Table 4 Mapping between M=2 bit and $2^M$=4 real numbers

| 00 | 0 |
|---|---|
| 01 | $\pi/2$ |
| 11 | $\pi$ |
| 10 | $3*\pi/2$ |

Table 5 shows the mapping of M=3 bit and $2^M$=8 real numbers. As shown in Table 5, if the three (3) bits are "000", it is indicated that the phase of the currently generated transmission symbol is identical to the phase of the preceding transmission symbol. Alternatively, if the three (3) bits are "001", it is indicated that the phase of the currently generated transmission symbol equals the sum of the phase of the preceding transmission symbol and $\pi/4$. Alternatively, if the three (3) bits are "011", it is indicated that the phase of the currently generated transmission symbol equals the sum of the phase of the preceding transmission symbol and $2\pi/4$, and so on, where $\pi$ represents Pi.

Table 5 Mapping between M=3 bit and $2^M$=8 real numbers

| 000 | 0 |
|---|---|
| 001 | $\pi/4$ |
| 011 | $2*\pi/4$ |
| 010 | $3*\pi/4$ |
| 110 | $\pi$ |
| 100 | $5*\pi/4$ |
| 101 | $6*\pi/4$ |
| 111 | $7*\pi/4$ |

Table 6 and Table 7 respectively show a mapping of M bits and $2^M$ real numbers. If $\Phi = 2\pi / 2^M$, the transmitting end maps M bits to $2^M$ real numbers with Table 6 or 7, that is, the transmitting end generates a real number for each set of M bits with Table 6 or Table 7. $\pi$ in the table represents Pi.

Table 6-Mapping between M bits and $2^M$ real numbers

| M bits $b_1, b_2,...,b_M$ | Corresponding $2^M$ real numbers |
|---|---|
| 00...00 | 0 |
| 00...01 | $1\Phi$ |
| 00...11 | $2\Phi$ |
| 00...10 | $3\Phi$ |
| ...... | ...... |
| 11...11 | $(2^{M2}-1)*\Phi$ |

Table 7-Mapping between M bits and $2^M$ real numbers

| M bits $b_1, b_2,...,b_M$ | Corresponding $2^M$ real numbers |
|---|---|
| 00...00 | $0.5\Phi$ |
| 00...01 | $1.5\Phi$ |

(continued)

| M bits $b_1, b_2,...,b_M$ | Corresponding $2^M$ real numbers |
|---|---|
| 00...11 | 2.5 Φ |
| 00...10 | 3.5Φ |
| ...... | ...... |
| 11...11 | $(2^{M2}-0.5)*\Phi$ |

In an embodiment, the amplitude of a transmission symbol includes a first amplitude and a second amplitude, and the first amplitude is greater than the second amplitude; the amplitude of the reference symbol is the first amplitude.

In this embodiment, two types of amplitudes of the transmission symbols ($A_b$ and $A_s$) are provided, and the phase of the reference symbol $S_0$ can be the larger one of the two types of amplitudes.

In an embodiment, bits for determining transmission symbols are classified into a plurality of groups, each group includes (M+1)*N bits, and each group corresponds to a reference symbol. The reference symbols are identical or different.

In this embodiment, the transmitting end can iteratively apply the transmission method as described above. For example, the i-th application of the above method generates Ni+1 transmission symbols, and then the transmission symbols generated each time are combined and transmitted altogether. In each generation of the transmission symbols, the same reference symbol or different reference symbols may be utilized. In other words, the reference symbol involved in the i-th generation of Ni+1 transmission symbols is denoted as $S_0^i$, and $S_0^i$ may be identical or different.

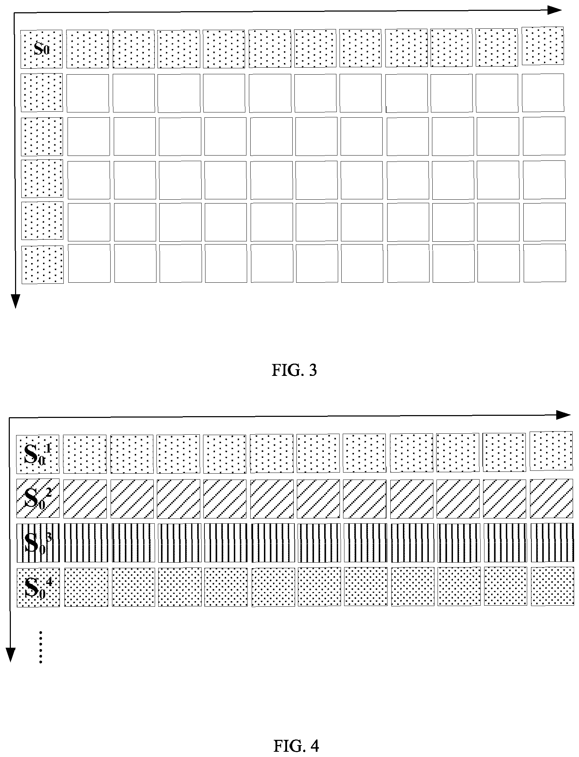

FIG. 3 depicts a schematic diagram showing an embodiment where the reference symbols of two sets of bits are identical. The transmission symbols are transmitted through two-dimensional time-frequency resources, such as OFDM, as shown in FIG. 3, where each grid represents a Resource Element (RE). The first generated Ni+1 transmission symbols through the above-described method are transmitted in the RE represented by the row of the shaded grids. Then, the $N_2$+1 transmission symbols generated through the above-described method are transmitted in the RE represented by the column of the shaded grids. The reference symbols $s_0$ for these two transmissions are identical, $s_0$ are transmitted over the RE where the rows and columns intersect.

FIG. 4 depicts a schematic diagram showing an embodiment where the reference symbols of each set of bits are different. As shown in FIG. 4, the same number of transmission symbols are generated multiple times with the above-described method. Each time, the transmission symbols generated by the above-described method are transmitted over a single row of RE, and the reference signals transmitted each time are different. For example, the reference symbols for the first three transmissions are $S_0^1$, $S_0^2$, $S_0^3$ respectively.

In an embodiment, the M bits for determination of the phase of the transmission symbols indexed odd numbers and the corresponding real number satisfy a first mapping relationship; while the M bits for determination of the phase of the transmission symbols indexed even numbers and the corresponding real number satisfy a second mapping relationship.

In this embodiment, the M*N bits for determination of the phases of the transmission symbols and the corresponding real numbers may satisfy at least two mapping relations. For example, when determining the phases of s1, s3, s5........., the M bits and $2^M$ real numbers satisfy the mapping shown in Table 6, and when determining the phases of s2, s4, s6........., the M bits and $2^M$ real numbers satisfy the mapping shown in Table 7. By determining the phase of transmission symbols with odd and even indices according to different mapping relationships, the peak-to-average ratio can be reduced and transmission performance can be improved.

In an embodiment, the reference symbol is a symbol with a preset amplitude and a preset phase. Alternatively, the phase of the reference symbol is preset, and the amplitude of the reference symbol is determined according to one bit.

An embodiment of the present disclosure provides a method for symbol reception. The method is applied to a receiving device or a receiving end. For technical details not described in detail in this embodiment please refer to any one of the above-described embodiments of the present disclosure.

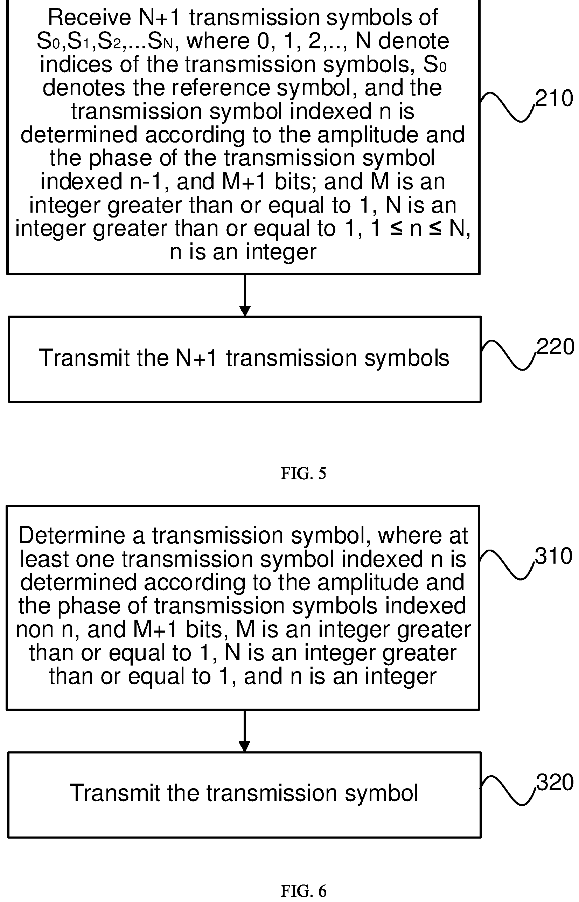

FIG. 5 depicts a flowchart showing a method for symbol reception according to an embodiment of the present disclosure. As shown in FIG. 5, the method includes operations 210 and 220.

At operation 210, N+1 transmission symbols of $S_0, S_1, S_2,..., S_N$ are received, where 0, 1, 2,.., N denote the indices of the transmission symbols, $S_0$ is the reference symbol, and the transmission symbol indexed n is determined according to the amplitude and the phase of the transmission symbol indexed n-1 and M+1 bits; and M is an integer greater than or equal to 1, N is an integer greater than or equal to 1, $1 \le n \le N$, n is an integer.

At operation 220, the N+1 transmission symbols are demodulated to obtain (M+1)*N bits.

In this embodiment, M+1 bits can be demodulated according to the phase difference component of the transmission symbol indexed n with respect to the transmission symbol indexed n-1 and the information on whether the amplitude has changed. As such, more bits are demodulated by means of fewer transmission symbols, thus improving the spectral efficiency.

In an embodiment, operation 220 includes operations 222 and 224.

At operation 222, M bits are determined according to the phase of the transmission symbol indexed n and the phase of the transmission symbol indexed n-1.

At operation 224, one bit is determined according to the amplitude of the transmission symbol indexed n and the amplitude of the transmission symbol indexed n-1.

In an embodiment, operation 222 includes the following operation.

Determining a real number according to the difference in phase of the transmission symbol indexed n with respect to the transmission symbol indexed n-1; and determining M bits corresponding to the real number.

In this embodiment, the difference in phase of the transmission symbol indexed n with respect to the transmission symbol indexed n-1 corresponds to a real number that is the phase difference component, and the values of the M bits corresponding to the real number can be determined according to the mapping relation.

In an embodiment, operation 224 includes the following operations.

The determination of the one bit according to the amplitude of the transmission symbol indexed n and the amplitude of the transmission symbol indexed n-1, includes the following operation.

Determining that the one bit has a first preset value in response to the ratio of the amplitude of the transmission symbol indexed n to the amplitude of the transmission symbol indexed n-1 being one (1). And determining that the one bit has a second preset value in response to the ratio of the amplitude of the transmission symbol indexed n to the amplitude of the transmission symbol indexed n-1 being non-one ($\neq$1).

In this embodiment, the ratio of the amplitude of the transmission symbol indexed n to the amplitude of the transmission symbol indexed n-1 being one (1), indicates an unchanged amplitude, which indicates that the value of the one bit for determination of the amplitude of the transmission symbol indexed n is a first preset value (such as, 1). The ratio of the amplitude of the transmission symbol indexed n to the amplitude of the transmission symbol indexed n-1 being non-one ($\neq$1), indicates a changed amplitude, which indicates that the value of the one bit for determination of the amplitude of the transmission symbol indexed n is a second preset value (such as, 0).

The following is the demodulation process of transmission symbols at the receiving end. In this embodiment, the transmission symbols received by the receiving end include a reference symbol $s_0$ and transmission symbols $s_n = a_n*\exp(j*(\varphi_n+\theta_{n-1}))$, where $n \in [1, N]$. On this basis, the N+1 transmission symbols received by the receiving end can be denoted as $\hat{s}_n = h_n * s_n * \exp(j*\chi_n) + w_n = h_n * a_n * \exp(j*(\varphi_n+\theta_{n-1}+\chi_n)) + w_n$, $n \in [0,N]$; where $h_n$ denotes the channel weighting experienced by the transmission symbol $s_n$, $\exp(j*\chi_n)$ denotes the rotation of the transmission symbol caused by factors such as phase noise, frequency offset, or time offset, $\chi_n$ denotes the phase associated with the rotation, and $w_n$ denotes the additive noise to $s_n$.

Based on the received N+1 transmission symbols, the receiving end recovers the (M+1) * N bits carried by the transmission symbols through the following two calculations.

$$\gamma_n = \left| \frac{\hat{s}_n}{\hat{s}_{n-1}} \right| = \frac{|\hat{s}_n|}{|\hat{s}_{n-1}|}$$

1) A ratio of the amplitudes of the two adjacent transmission symbols is calculated.

Suppose that at the transmitting end, the amplitude $a_n$ of the transmission symbol indexed n, $s_n$ is determined as follows: if $b_n = 0$, $a_{n-1} = Ab$, then $a_n = Ab$; if $b_n = 0$ and $a_{n-1} = As$, then $a_n = As$; if $b_n = 1$, and $a_{n-1} = Ab$, then $a_n = As$; if $b_n = 1$, and $a_{n-1} = As$, then $a_n = Ab$. In other words, if the one bit is "0", the amplitudes of adjacent transmission symbols remain unchanged; or if the one bit is "1", the amplitudes of adjacent transmission symbols change. Furthermore, suppose $A_s < A_b$.

If $\dfrac{A_s}{A_b} \leq \gamma_n \leq \dfrac{A_b}{A_s}$ , it indicates that the amplitude of the subsequent transmission symbol does not alter with respect to the preceding transmission symbol, then the receiving end can recover bit $b_n$ to be "0" according to $\gamma_n$.

Alternatively, if $\gamma_n < \dfrac{A_s}{A_b}$ or $\gamma_n > \dfrac{A_b}{A_s}$ , it indicates that the amplitude of the subsequent transmission symbol alters with respect to the preceding transmission symbol, then the receiving end can recover bit $b_n$ to be "1" according to $\gamma_n$.

2) Through the calculation of $\dfrac{\hat{s}_n}{\hat{s}_{n-1}} = \dfrac{a_n \exp(j*(\varphi_n + \theta_{n-1} + \chi_n)) + w_n}{a_{n-1} \exp(j*(\theta_{n-1} + \chi_{n-1})) + w_{n-1}} \approx \dfrac{a_n}{a_{n-1}} \exp(j*\varphi_n)$ , and taking the

phase of $\dfrac{\hat{s}_n}{\hat{s}_{n-1}}$ , the estimated value of the real number $\varphi_n$ can be obtained. Based on the estimated value of the real number $\varphi_n$ and the mapping relationship between M bits and $2^M$ real numbers, the M bits corresponding to the real number $\varphi_n$ can be solved.

In an embodiment, the method further includes operation 212.

At operation 212, the mapping relation between a sequence of M bits and $2^M$ real numbers is determined, where the mapping relation satisfies the principle that only one bit of the two groups of bit sequences of M bits corresponding to nearest two real numbers changes. See Table 1 to Table 7 for details.

In an embodiment, the M bits for determination of the phase of the transmission symbols indexed odd numbers and the corresponding real number satisfy a first mapping relationship; while the M bits for determination of the phase of the transmission symbols indexed even numbers and the corresponding real number satisfy a second mapping relationship.

In an embodiment, the reference symbol is a symbol with a preset amplitude and a preset phase. Alternatively, the phase of the reference symbol is preset, and the amplitude of the reference symbol is determined according to one bit.

An embodiment of the present disclosure provides a method for symbol transmission. The method is applied to a transmitting device or a transmitting end. For technical details not described in detail in this embodiment please refer to any one of the above-described embodiments of the present disclosure.

FIG. 6 depicts a flowchart showing another method for symbol transmission according to an embodiment of the present disclosure. As shown in FIG. 6, the method includes operations 310 and 320.

At operation 310, a transmission symbol is determined, where at least one transmission symbol indexed n is determined according to the amplitude and the phase of a transmission symbol indexed non n, and M+1 bits, M is an integer greater than or equal to 1, N is an integer greater than or equal to 1, and n is an integer.

At operation 320, the transmission symbol is transmitted.

In this embodiment, at the transmitting end, at least one transmission symbol is provided with the amplitude and the phase determined as follows.

The phase of the transmission symbol is determined jointly according to M bits and the phase of an additional transmission symbol, where the additional transmission symbol can be a transmission symbol preceding the transmission symbol in discussion, or a preset reference symbol.

The amplitude of the transmission symbol is determined jointly by one bit and the amplitude of the additional transmission symbol, where $M \geq 1$.

On this basis, the transmission symbol carries M+1 bits of information, thus improving the spectral efficiency.

In an embodiment, the transmission symbol indexed non n is a reference symbol or a transmission symbol indexed n-1, and n is a positive integer.

In an embodiment, the phase of at least one transmission symbol indexed n is determined according to the phase of a transmission symbol indexed non n, and M bits. The amplitude of the transmission symbol indexed n is determined according to the amplitude of the transmission symbol indexed non n, and one bit.

In this embodiment, at least one transmission symbol is provided, and the phase of the transmission symbol is jointly determined according to M bits and the phase of an additional transmission symbol, where the M bits generate a corresponding real number, and the phase of the transmission symbol is equal to the sum of the phase of the additional transmission symbol and the real number. And the amplitude of the transmission symbol is jointly determined by one bit and the amplitude of the additional transmission symbol.

In an embodiment, the phase of at least one transmission symbol indexed n is obtained by the sum of the phase of a transmission symbol indexed non n, and a real number generated according to the M bits.

In an embodiment, the method further includes operation 300.

At operation 300, the mapping relation between a sequence of M bits and $2^M$ real numbers is determined. The mapping relation satisfies the principle that only one bit of the two groups of bit sequences of M bits corresponding to nearest two real numbers changes.

In an embodiment, different values of M bits correspond to different real numbers, there exist $2^M$ values for M bits and corresponding real numbers, and the relation between the M bits and $2^M$ real numbers satisfies the Gray mapping.

In an embodiment, the amplitude of the transmission symbol indexed n is determined as being identical to that of the transmission symbol indexed non-n, in response to the one (1) bit having a first preset value; and the amplitude of the transmission symbol indexed n is determined as being different from that of the transmission symbol indexed non-n, in response to the one (1) bit having a second preset value; where, two types of amplitudes of the transmission symbols are provided.

In an embodiment, at least one transmission symbol is provided with an amplitude being determined jointly based on one bit and the amplitude of the additional transmission symbol described above. In particular, if the one bit is "0", and the amplitude of the additional transmission symbol is $A_b$, then the amplitude of the transmission symbol is equal to $A_b$. If the one bit is "0", and the amplitude of the additional transmission symbol is $A_s$, then the amplitude of that transmission symbol is equal to $A_s$. If the one bit is "1", and the amplitude of the additional transmission symbol is $A_b$, then the amplitude of that transmission symbol is equal to $A_s$. If the one bit is "1", and the amplitude of the additional transmission symbol is $A_s$, then the amplitude of that transmission symbol is equal to $A_b$.

The meaning of this method for amplitude determination lies in that if the one bit is "0", it is indicated that the amplitude of the currently generated transmission symbol remains unchanged with respect to that of the additional transmission symbol; and if the one bit is "1", it is indicated that the amplitude of the currently generated transmission symbol changes with respect to that of the additional transmission symbol.

Alternatively, at least one transmission symbol is provided with an amplitude being determined as follows. In particular, if the one bit is "1", and the amplitude of the additional transmission symbol is $A_b$, then the amplitude of the transmission symbol is equal to $A_b$. If the one bit is "1", and the amplitude of the additional transmission symbol is $A_s$, then the amplitude of that transmission symbol is equal to $A_s$. If the one bit is "0", and the amplitude of the additional transmission symbol is $A_b$, then the amplitude of that transmission symbol is equal to $A_s$. If the one bit is "0", and the amplitude of the additional transmission symbol is $A_s$, then the amplitude of that transmission symbol is equal to $A_b$.

The meaning of this method for amplitude determination is that if the one bit is "1", it indicates that the amplitude of the currently generated transmission symbol is unchanged with respect to that of the additional transmission symbol. If the one bit is "0", it is indicated that the amplitude of the currently generated transmission symbol changes with respect to that of the additional transmission symbol.

According to the method set forth in this embodiment, at least one transmission symbol can carry one more bit of information by means of the amplitude difference of two transmission symbols in addition to the phase difference during the generation of the transmission symbols, thus improving the spectral efficiency.

In an embodiment, operation 310 includes the following operations.

Determining, N+1 transmission symbols of $S_0, S_1, S_2, ..., S_N$ according to a reference symbol and (M+1)*N bits, where 0, 1, 2,.., N denote the indices of the transmission symbols, $s_0$ is the reference symbol, and the transmission symbol indexed n is determined according to the amplitude and the phase of the transmission symbol indexed n-1, and M+1 bits; where $1 \leq n \leq N$, and n is an integer. See operations 110 to 120 for details.

In an embodiment, the M bits for determination of the phase of the transmission symbols indexed odd numbers and the corresponding real number satisfy a first mapping relationship; while the M bits for determination of the phase of the transmission symbols indexed even numbers and the corresponding real number satisfy a second mapping relationship.

In an embodiment, the reference symbol is a symbol with a preset amplitude and a preset phase. Alternatively, the phase of the reference symbol is preset, and the amplitude of the reference symbol is determined according to one bit.

An embodiment of the present disclosure provides a method for symbol reception. The method is applied to a receiving device or a receiving end. For technical details not described in detail in this embodiment please refer to any one of the above-described embodiments of the present disclosure.

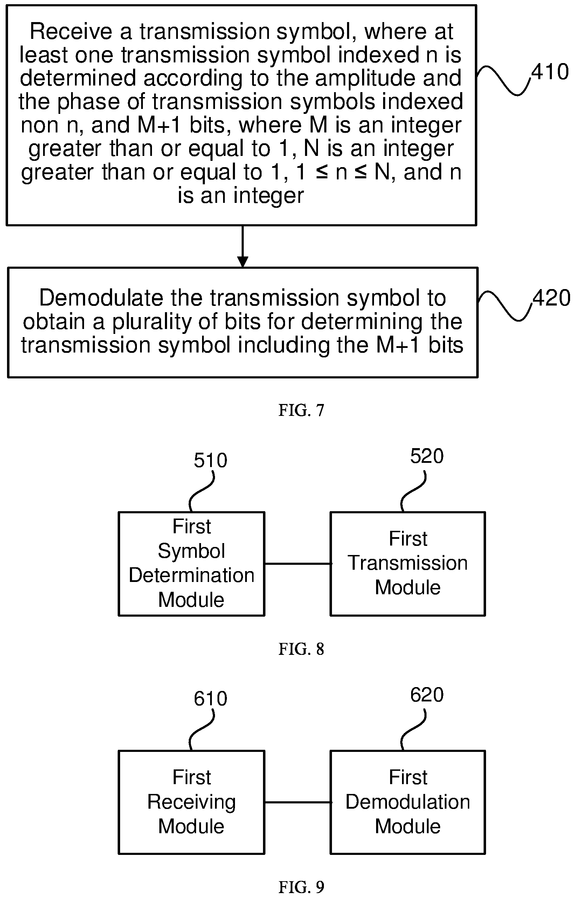

FIG. 7 depicts a flowchart showing another method for symbol reception according to an embodiment of the present disclosure. As shown in FIG. 7, the method includes operations 410 and 420.

At operation 410, a transmission symbol is received, where at least one transmission symbol indexed n is determined according to the amplitude and the phase of transmission symbols indexed non n, and M+1 bits, where M is an integer greater than or equal to 1, N is an integer greater than or equal to 1, and n is an integer.

At operation 420, the transmission symbol is demodulated to obtain a plurality of bits for determining transmission symbols including the M+1 bits.

In this embodiment, M+1 bits can be demodulated according to the phase difference component of the transmission symbol indexed n with respect to the transmission symbol indexed n-1 and the information on whether the amplitude has changed, thus improving the spectral efficiency.

In an embodiment, the transmission symbol indexed non n is a reference symbol or a transmission symbol indexed n-1, and n is a positive integer.

In an embodiment, the phase of at least one transmission symbol indexed n is determined according to the phase of a transmission symbol indexed non n, and M bits. The amplitude of the transmission symbol indexed n is determined according to the amplitude of the transmission symbol indexed non n, and one bit.

In an embodiment, the phase of at least one transmission symbol indexed n is obtained by the sum of the phase of a transmission symbol indexed non n, and a real number generated according to the M bits.

In this embodiment, the difference in phase of the transmission symbol indexed n with respect to the transmission symbol indexed n-1 corresponds to a real number that is the phase difference component, and the values of the M bits corresponding to the real number can be determined according to the mapping relation.

In an embodiment, the method further includes operation 412.

At operation 412, the mapping relation between a sequence of M bits and $2^M$ real numbers is determined. The mapping relation satisfies the principle that only one bit of the two groups of bit sequences of M bits corresponding to nearest two real numbers changes.

In an embodiment, the amplitude of the transmission symbol indexed n is determined as being identical to that of the transmission symbol indexed non-n, in response to the one (1) bit having a first preset value; and the amplitude of the transmission symbol indexed n is determined as being different from that of the transmission symbol indexed non-n, in response to the one (1) bit having a second preset value; where, two types of amplitudes of the transmission symbols are provided.

In this embodiment, the ratio of the amplitude of the transmission symbol indexed n to the amplitude of the transmission symbol indexed n-1 being one (1), indicates an unchanged amplitude, which indicates that the value of the one bit corresponding to the amplitude of the transmission symbol indexed n is the first preset value (such as, 1). The ratio of the amplitude of the transmission symbol indexed n to the amplitude of the transmission symbol indexed n-1 being non-one ($\neq 1$), indicates a changed amplitude, which indicates that the value of the one bit corresponding to the amplitude of the transmission symbol indexed n is the second preset value (such as, 0).

In an embodiment, the M bits for determination of the phase of the transmission symbols indexed odd numbers and the corresponding real number satisfy a first mapping relationship; while the M bits for determination of the phase of the transmission symbols indexed even numbers and the corresponding real number satisfy a second mapping relationship.

In an embodiment, the reference symbol is a symbol with a preset amplitude and a preset phase. Alternatively, the phase of the reference symbol is preset, and the amplitude of the reference symbol is determined according to one bit.

An embodiment of the present disclosure provides a device for symbol transmission. FIG. 8 depicts a schematic diagram showing a device for symbol transmission according to an embodiment of the present disclosure. As shown in FIG. 8, the device includes a first symbol determination module 510, which is configured to determine N+1 transmission symbols of $s_0$, $s_1$, $s_2$,...,$s_N$ according to a reference symbol and (M+1)*N bits, where 0, 1, 2,.., N denote the indices of the transmission symbols, $s_0$ is the reference symbol, and the transmission symbol indexed n is determined according to the amplitude and the phase of the transmission symbol indexed n-1 and M+1 bits; and M is an integer greater than or equal to 1, N is an integer greater than or equal to 1, $1 \leq n \leq N$, n is an integer; and a first transmission module 520, which is configured to transmit the N+1 transmission symbols.

The device set forth in this embodiment carries bits of information by means of the amplitude and phase differences of two symbols, thus improving the spectral efficiency.

In an embodiment, the first symbol determination module 510 includes, a reference symbol determination unit configured to determine a transmission symbol indexed 0, $S_0$; a phase determination unit configured to determine the phase of the transmission symbol indexed n based on the phase of the transmission symbol indexed n-1 and M bits; an amplitude determination unit configured to determine the amplitude of the transmission symbol indexed n based on the amplitude of the transmission symbol indexed n-1 and one (1) bit; and a symbol determination unit configured to determine the transmission symbol indexed n based on the phase and the amplitude of the transmission symbol indexed n.

In an embodiment, the phase determining unit is configured to generate a corresponding real number according to the M bits; and add the real number with the phase of the transmission symbol indexed n-1 to obtain the phase of the transmission symbol indexed n.

In an embodiment, the amplitude of the transmission symbol indexed n satisfies the following requirements: when the 1 bit for determining the amplitude of the transmission symbol indexed n has a first preset value, the amplitude of the transmission symbol indexed n is determined as being identical with that of the transmission symbol indexed n-1; and when the 1 bit for determining the amplitude of the transmission symbol indexed n has a second preset value, the amplitude of the transmission symbol indexed n is determined as being different from that of the transmission symbol indexed n-1; where, two types of amplitudes of the transmission symbols are provided.

In an embodiment, the device further includes a first mapping module, which is configured to determine the mapping relation between a sequence of M bits and $2^M$ real numbers; where the mapping relation satisfies the principle that only one bit of the two groups of bit sequences of M bits corresponding to nearest two real numbers changes.

In an embodiment, the amplitude of a transmission symbol includes a first amplitude and a second amplitude, and the first amplitude is greater than the second amplitude; the amplitude of the reference symbol is the first amplitude.

In an embodiment, bits for determining transmission symbols are classified into a plurality of groups, each group includes (M+1)*N bits, and each group corresponds to a reference symbol. The reference symbols are identical or different.

In an embodiment, the M bits for determination of the phase of the transmission symbols indexed odd numbers and the corresponding real number satisfy a first mapping relationship; while the M bits for determination of the phase of the transmission symbols indexed even numbers and the corresponding real number satisfy a second mapping relationship.

In an embodiment, the reference symbol is a symbol with a preset amplitude and a preset phase. Alternatively, the phase of the reference symbol is preset, and the amplitude of the reference symbol is determined according to one bit.

The device for symbol transmission set forth in this embodiment and the method for symbol transmission proposed in the above embodiment share the same inventive concept. Technical details not fully described in this embodiment can be found in any of the above-described embodiments, and this embodiment has the same beneficial effect as that of the method for symbol transmission.

An embodiment of the present disclosure provides another device for symbol reception. FIG. 9 depicts a schematic diagram showing a device for symbol reception according to an embodiment of the present disclosure. As shown in FIG. 9, the device includes a first symbol reception module 610, which is configured to receive N+1 transmission symbols of $S_0, S_1, s_2, ..., S_N$, where 0, 1, 2,.., N denote the indices of the transmission symbols, $s_0$ is the reference symbol, and the transmission symbol indexed n is determined according to the amplitude and the phase of the transmission symbol indexed n-1 and M+1 bits; and M is an integer greater than or equal to 1, N is an integer greater than or equal to 1, $1 \leq n \leq N$, n is an integer; and a first demodulation module 620, which is configured to demodulate the N+1 transmission symbols to acquire (M+1)*N bits.

According to the device for symbol reception in this embodiment, more bits can be demodulated by means of fewer transmission symbols, thus improving spectral efficiency.

In an embodiment, the first demodulation module 620 includes a phase demodulation unit configured to determine M bits based on the phase of the transmission symbol indexed n and the phase of the transmission symbol indexed n-1; and an amplitude demodulation unit configured to determine one bit based on the amplitude of the transmission symbol indexed n and the amplitude of the transmission symbol indexed n-1.

In an embodiment, the phase demodulation unit is configured to determine a real number according to the phase difference of the transmission symbol indexed n with respect to the transmission symbol indexed n-1; and determine M bits corresponding to the real number.

In an embodiment, the amplitude demodulation unit is configured to determine that the one bit has a first preset value in response to the ratio of the amplitude of the transmission symbol indexed n to the amplitude of the transmission symbol indexed n-1 being one (1); and to determine that the one bit has a second preset value in response to the ratio of the amplitude of the transmission symbol indexed n to the amplitude of the transmission symbol indexed n-1 being non-one ($\neq 1$).

In an embodiment, the device further includes a second mapping module, which is configured to determine the mapping relation between a sequence of M bits and $2^M$ real numbers; where the mapping relation satisfies the principle that only one bit of the two groups of bit sequences of M bits corresponding to the nearest two real numbers changes.

A first set of M bits for determination of the phase of the transmission symbols indexed odd numbers and the corresponding real number satisfy a first mapping relationship; while a second set of M bits for determination of the phase of the transmission symbols indexed even numbers and the corresponding real number satisfy a second mapping relationship.

In an embodiment, the reference symbol is a symbol with a preset amplitude and a preset phase. Alternatively, the phase of the reference symbol is preset, and the amplitude of the reference symbol is determined according to one bit.

The device for symbol reception set forth in this embodiment and the method for symbol reception proposed in the above embodiment share the same inventive concept. Technical details not fully described in this embodiment can be found in any of the above-described embodiments, and this embodiment has the same beneficial effect as that of the method for symbol reception.

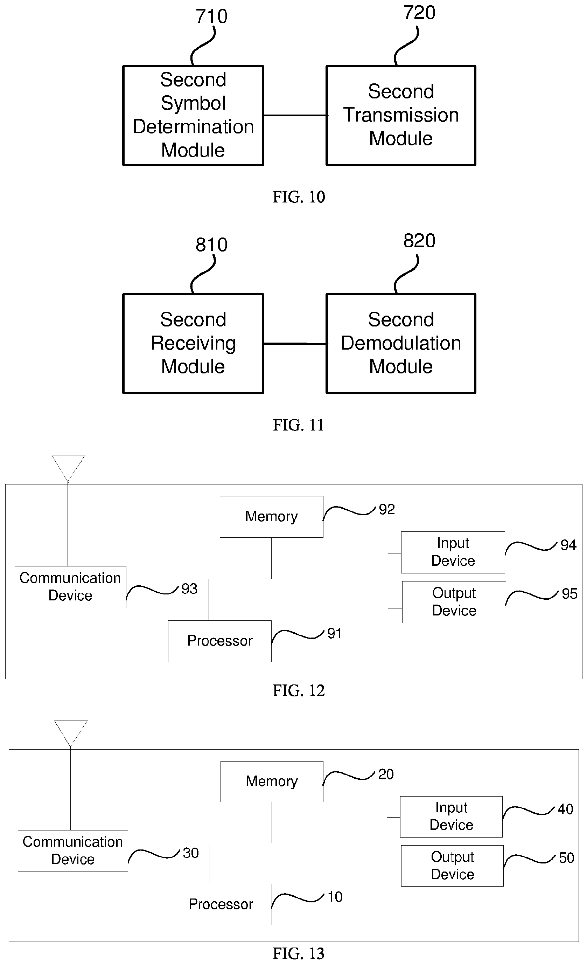

An embodiment of the present disclosure provides a device for symbol transmission. FIG. 10 depicts a schematic diagram showing another device for symbol transmission according to an embodiment of the present disclosure. As shown in FIG. 10, the device includes a second symbol determination module 710, which is configured to determine a transmission symbol, where at least one transmission symbol indexed n is determined according to the amplitude and the phase of transmission symbols indexed non n, and M+1 bits, M is an integer greater than or equal to 1, N is an integer greater than or equal to 1, and n is an integer; and a second transmission module 720, which is configured to transmit the transmission symbol.

According to the device for symbol transmission set forth in this embodiment, the spectral efficiency is improved by a transmission symbol carrying M+1 bits.

In an embodiment, the transmission symbol indexed non n is a reference symbol or a transmission symbol indexed n-1, and n is a positive integer.

In an embodiment, the phase of at least one transmission symbol indexed n is determined according to the phase of a transmission symbol indexed non n, and M bits. The amplitude of the transmission symbol indexed n is determined according to the amplitude of the transmission symbol indexed non n, and one bit.

In an embodiment, the phase of at least one transmission symbol indexed n is obtained by the sum of the phase of a transmission symbol indexed non n, and a real number generated according to the M bits.

In an embodiment, the device further includes a third mapping module configured to determine the mapping relation between a sequence of M bits and a real number; where the mapping relation satisfies the principle that only one bit of the two groups of bit sequences of M bits corresponding to the nearest two real numbers changes.

In an embodiment, the amplitude of the transmission symbol indexed n is determined as being identical to that of the transmission symbol indexed non-n, in response to the one (1) bit having a first preset value; and the amplitude of the transmission symbol indexed n is determined as being different from that of the transmission symbol indexed non-n, in response to the one (1) bit having a second preset value; where, two types of amplitudes of the transmission symbols are provided.

In an embodiment, the second symbol determining module 710 is configured to determine, N+1 transmission symbols of $s_0$, $s_1$, $s_2$ ,..., $s_N$ according to a reference symbol and (M+1)*N bits, where 0, 1, 2,.., N denote the indices of the transmission symbols, $s_0$ is the reference symbol, and the transmission symbol indexed n is determined according to the amplitude and the phase of the transmission symbol indexed n-1, and M+1 bits; where $1 \leq n \leq N$, and n is an integer.

In an embodiment, the M bits for determination of the phase of the transmission symbols indexed odd numbers and the corresponding real number satisfy a first mapping relationship; while the M bits for determination of the phase of the transmission symbols indexed even numbers and the corresponding real number satisfy a second mapping relationship.

In an embodiment, the reference symbol is a symbol with a preset amplitude and a preset phase. Alternatively, the phase of the reference symbol is preset, and the amplitude of the reference symbol is determined according to one bit.

The device for symbol transmission set forth in this embodiment and the method for symbol transmission proposed in the above embodiment share the same inventive concept. Technical details not fully described in this embodiment can be found in any of the above-described embodiments, and this embodiment has the same beneficial effect as that of the method for symbol transmission.

An embodiment of the present disclosure provides a device for symbol reception. FIG. 11 depicts a schematic diagram showing another device for symbol reception according to an embodiment of the present disclosure. As shown in FIG. 11, the device includes a second reception module 810, which is configured to receive a transmission symbol, where at least one transmission symbol indexed n is determined according to the amplitude and the phase of transmission symbols indexed non n, and M+1 bits, M is an integer greater than or equal to 1, N is an integer greater than or equal to 1, and n is an integer; and a second demodulation module 820, which is configured to demodulate the transmission symbol to acquire bits for determining a transmission symbol, the bits include the M+1 bits.

According to the device for symbol reception set forth in this embodiment, M+1 bits are acquired by demodulation of a transmission symbol, thus improving the spectral efficiency.

In an embodiment, the transmission symbol indexed non n is a reference symbol or a transmission symbol indexed n-1, and n is a positive integer.

In an embodiment, the phase of at least one transmission symbol indexed n is determined according to the phase of a transmission symbol indexed non n, and M bits. The amplitude of the transmission symbol indexed n is determined according to the amplitude of the transmission symbol indexed non n, and one bit.

In an embodiment, the phase of at least one transmission symbol indexed n is obtained by the sum of the phase of a transmission symbol indexed non n, and a real number generated according to the M bits.

In an embodiment, the device further includes a fourth mapping module, which is configured to determine the mapping relation between a sequence of M bits and $2^M$ real numbers; where the mapping relation satisfies the principle that only one bit of the two groups of bit sequences of M bits corresponding to the nearest two real numbers changes.

In an embodiment, the amplitude of the transmission symbol indexed n is determined as being identical to that of the transmission symbol indexed non-n, in response to the one (1) bit having a first preset value; and the amplitude of the transmission symbol indexed n is determined as being different from that of the transmission symbol indexed non-n, in response to the one (1) bit having a second preset value; where, two types of amplitudes of the transmission symbols are provided.

In an embodiment, the M bits for determination of the phase of the transmission symbols indexed odd numbers and the corresponding real number satisfy a first mapping relationship; while the M bits for determination of the phase of the transmission symbols indexed even numbers and the corresponding real number satisfy a second mapping relationship.

In an embodiment, the reference symbol is a symbol with a preset amplitude and a preset phase. Alternatively, the phase of the reference symbol is preset, and the amplitude of the reference symbol is determined according to one bit.

The device for symbol reception set forth in this embodiment and the method for symbol reception proposed in the above embodiment share the same inventive concept. Technical details not fully described in this embodiment can be found in any of the above-described embodiments, and this embodiment has the same beneficial effect as that of the method for symbol reception.

An embodiment of the present disclosure provides a transmitting apparatus. FIG. 12 depicts a schematic diagram showing a transmitting apparatus according to an embodiment of the present disclosure. As shown in FIG. 12, the transmitting apparatus includes a memory 92, a processor 91, and a computer program stored in the memory 92 and executable by the processor 91 which, when executed by the processor 91, causes the processor 91 to carry out the method for symbol transmission in any one of the embodiments as described above.

The transmitting apparatus can further include a memory 92, and at least one processor 91. FIG. 12 shows one processor 91 by way of example. The storage 92 is configured to store at least one program thereon which, when executed by the at least one processor 91, causes the at least one processor 91 to carry out the method for symbol transmission in any one embodiment of the present disclosure.

The transmitting apparatus further includes a communication device 93, an input device 94, and an output device 95.

The processor 91, the memory 92, the communication device 93, the input device 94, and the output device 95 in the transmitting apparatus can be connected by a bus or other means. The connection is shown as a bus by way of an example in FIG. 12.

The input device 94 may be configured to receive input numeric or character information and generate key-pressing signal input related to user settings and function control of the transmitting apparatus. The output device 95 may include a display device such as a screen.

The communication device 93 may include a receiver and a transmitter. The communication device 93 is configured to receive and transmit information for communication under the control of the processor 91.

As a computer-readable storage medium, the memory 92 may be configured to store software programs, computer-executable programs, and modules, such as program instructions/modules corresponding to the method for symbol transmission as described in any one of the embodiments of the present disclosure, such as the first symbol determination module 510, and the first transmission module 520 in the device for symbol transmission. The memory 92 may generally include a program storage section and a data storage section, in which the program storage section may store an operating system and application programs for performing at least one operation, and the data storage section may store data created according to the operation of the transmitting apparatus, or the like. In addition, memory 92 can include high-speed random-access memory and a nonvolatile memory, such as at least one disk memory device, a flash memory device, or other nonvolatile solid-state memory devices. In some examples, the memory 92 may further include memories remotely located relative to the processor 91, and these remote memories may be connected to the transmitting apparatus through a network. Examples of the above networks include, but are not limited to, the Internet, intranet, local area network, mobile communication network, and combinations thereof.

An embodiment of the present disclosure provides a receiving apparatus. FIG. 13 depicts a schematic diagram showing a receiving apparatus according to an embodiment of the present disclosure. As shown in FIG. 13, the receiving apparatus includes a memory 20, a processor 10, and a computer program stored in memory 20 and executable by processor 10 which, when executed by processor 10, causes processor 10 to carry out the method for symbol reception in any one of the embodiments as described above.

The receiving apparatus can further include a memory 20, and at least one processor 10. FIG. 13 shows one processor 10 by way of example. Memory 20 is configured to store at least one program thereon which, when executed by the at least one processor 10, causes the at least one processor 10 to carry out the method for symbol reception in any one embodiment of the present disclosure.

The receiving apparatus further includes a communication device 30, an input device 40, and an output device 50.

The processor 10, the memory 20, the communication device 30, the input device 40 and the output device 50 in the receiving apparatus can be connected by a bus or other means. The connection is shown as a bus by way of an example in FIG. 13.

The input device 40 may be configured to receive input numeric or character information and generate key-pressing signal input related to user settings and function control of the receiving apparatus. The output device 50 may include a display device such as a screen.

The communication device 30 may include a transceiver. The communication device 30 is configured to receive and transmit information for communication under the control of the processor 10.

As a computer-readable storage medium, the memory 20 may be configured to store software programs, computer-executable programs and modules, such as program instructions/modules corresponding to the method for symbol reception as described in any one of the embodiments of the present disclosure, such as the first reception module 61, and the first demodulation module 620. The memory 20 may generally include a program storage section and a data storage section, in which the program storage section may store an operating system and application programs for performing at least one operation, and the data storage section may store data created according to the operation of the receiving apparatus, or the like. In addition, the memory 20 can include high-speed random-access memory and a nonvolatile memory, such as at least one disk memory device, a flash memory device, or other nonvolatile solid-state memory devices. In some implementations, the memory 20 may include memories remotely located relative to the processor 10, and these remote memories may be connected to the receiving apparatus through a network. Examples of the above networks include, but are not limited to, the Internet, intranet, local area network, mobile communication network, and combinations thereof.

An embodiment of the present disclosure provides a storage medium storing a computer program which, when executed by a processor, causes the processor to carry out the method described in any one embodiment of the present disclosure. The method for symbol transmission includes, determining N+1 transmission symbols of $S_0, S_1, S_2 ,...., S_N$ according to a reference symbol and (M+1)*N bits, where 0, 1, 2,.., N denote the indices of the transmission symbols, $S_0$ is the reference symbol, and the transmission symbol indexed n is determined according to the amplitude and the phase of the transmission symbol indexed n-1 and M+1 bits; and M is an integer greater than or equal to 1, N is an integer greater than or equal to 1, $1 \le n \le N$, n is an integer; and transmitting the N+1 transmission symbols.

The method for symbol reception includes, receiving N+1 transmission symbols of $S_0, S_1, S_2 ,...., S_N$, where 0, 1, 2,.., N denote the indices of the transmission symbols, $S_0$ is the reference symbol, and the transmission symbol indexed n is determined according to the amplitude and the phase of the transmission symbol indexed n-1 and M+1 bits; and M is an integer greater than or equal to 1, N is an integer greater than or equal to 1, $1 \le n \le N$, n is an integer; and demodulating the N+1 transmission symbols to obtain (M+1)*N bits.

Alternatively, the method for symbol transmission includes determining a transmission symbol, where at least one transmission symbol indexed n is determined according to the amplitude and the phase of transmission symbols indexed non n, and M+1 bits, M is an integer greater than or equal to 1, N is an integer greater than or equal to 1, and n is an integer; and transmitting the transmission symbol.

The method for symbol reception includes, receiving a transmission symbol, where at least one transmission symbol indexed n is determined according to the amplitude and the phase of transmission symbols indexed non n, and M+1 bits, M is an integer greater than or equal to 1, N is an integer greater than or equal to 1, and n is an integer; and demodulating the transmission symbol to obtain a plurality of bits for determining transmission symbols including the M+1 bits.

The computer storage medium in an embodiment of the present disclosure can take the form of any combination of one or more computer-readable mediums. The computer-readable medium can be a computer-readable signal medium or a computer-readable storage medium. The computer-readable storage media can be, for example, but is not limited to: systems, apparatus, or devices of electricity, magnetism, optical, electromagnetism, infrared, or semiconductors, or any combination of the above. More specific examples of computer-readable storage media (non exhaustive list) include: electrical connections with one or more wires, portable computer disks, hard drives, Random Access Memory (RAM), Read Only Memory (ROM), Erasable Programmable Read Only Memory (EPROM), flash memory, fiber optic, portable CD-ROM, optical storage devices, magnetic storage devices, or any suitable combination of the above. The computer-readable storage medium can be any tangible medium that contains or stores a program, which can be used by or in combination with an instruction execution system, apparatus, or device.

The computer-readable signal medium can include data signals propagated in the baseband or as part of the carrier wave, which carry computer readable program code. This type of transmitted data signal can take various forms, including but not limited to electromagnetic signals, optical signals, or any suitable combination of the above. The computer-readable signal medium can also be any computer-readable medium other than a computer-readable storage medium, which can send, propagate, or transmit programs used by or in combination with instruction execution systems, apparatus, or devices.

The program code contained on computer-readable media can be transmitted using any suitable medium, including but not limited to: wireless, wire, optical cable, Radio Frequency (RF), etc., or any suitable combination of the above.

Computer program code for executing the operations of the present disclosure may be written in one or more programming languages or combinations thereof, including object-oriented programming languages such as Java, Smalltalk, C++, and conventional procedural programming languages such as "C" or similar programming languages. Program code can be completely executed on the user's computer, partially executed on the user's computer, executed as a standalone software package, partially executed on the user's computer, partially executed on a remote computer, or completely executed on a remote computer or server. In terms of remote computers, remote computers can connect to user computers through any type of network, including a local area network (LAN) or wide area network (WAN), or can connect to external computers (such as utilizing an Internet service provider to connect through the Internet).

Some embodiments are described above which are illustrative and are not intended to limit the present disclosure.

It should be understood by those having ordinary skills in the art that the term user equipment covers any suitable type of wireless user equipment, such as a mobile phone, a portable data processing device, a portable web browser, or a vehicle-mounted mobile station.

Generally, various embodiments of the present disclosure may be implemented as hardware or dedicated circuits, software, logic or any suitable combination thereof. For example, some aspects may be implemented as hardware, while other aspects may be implemented as firmware or software executable by a controller, microprocessor or other computing device, although the present disclosure is not limited thereto.

Some embodiments of the present disclosure can be implemented by a data processor of a mobile device executing computer program instructions, for example, in a processor entity, or by hardware, or by a combination of software and hardware. Computer program instructions can be assembly instructions, instruction set architecture (ISA) instructions, machine instructions, machine-related instructions, microcode, firmware instructions, state setting data, or source code or object code written in any combination of one or more programming languages.

The block diagram of any logic flow in the drawings of the present disclosure may represent program process, or may represent interconnected logic circuits, modules and functions, or may represent the combination of program process and logic circuits, modules, and functions. Computer programs can be stored in the memory. The memory can be of any type suitable for the local technical environment and can be realized with any suitable data storage technology, such as, but not limited to, read-only memory (ROM), random access memory (RAM), optical memory devices and systems like Digital Video Disc (DVD), or Compact Disk (CD) etc. Computer-readable media may include non-transitory storage media. The data processor can be of any type suitable for the local technical environment, such as but not limited to a general-purpose computer, a special-purpose computer, a microprocessor, a digital signal processor (DSP), an application-specific integrated circuit (ASIC), a Field-Programmable Gate Array (FGPA) and a processor based on a multi-core processor architecture.

Some embodiments of the present disclosure are illustrated above by way of non-limiting implementations. However, various modifications and alternations to the above embodiments are apparent to those having ordinary skills in the art when considering the drawings and claims, without departing from the scope of the present disclosure. Therefore, the proper scope of the present disclosure should be defined by claims.

**Claims**

1. A method for symbol transmission, comprising,

   determining, N+1 transmission symbols of $S_0$, $S_1$, $S_2$ ,..., $S_N$ according to a reference symbol and (M+1)*N bits, wherein 0, 1, 2,.., N denote indices of the transmission symbols, $S_0$ denotes the reference symbol; a transmission symbol indexed n is determined according to an amplitude and a phase of a transmission symbol indexed n-1, and M+1 bits; and M is an integer greater than or equal to 1, N is an integer greater than or equal to 1, $1 \leq n \leq N$, n is an integer; and
   transmitting the N+1 transmission symbols.

2. The method as claimed in claim 1, wherein determining N+1 transmission symbols $S_0$, $S_1$, $S_2$ ,..., $S_N$ according to the reference symbol and (M+1)*N bits comprises,

   determining a transmission symbol indexed 0, $S_0$;
   determining a phase of the transmission symbol indexed n according to the phase of the transmission symbol indexed n-1, and M bits;
   determining an amplitude of the transmission symbol indexed n according to the amplitude of the transmission symbol indexed n-1 and one bit; and
   determining the transmission symbol indexed n according to the phase and the amplitude of the transmission symbol indexed n.

3. The method as claimed in claim 2, wherein determining the phase of the transmission symbol indexed n according to the phase of the transmission symbol indexed n-1, and the M bits comprises,

   generating a corresponding real number according to the M bits;
   adding the real number to the phase of the transmission symbol indexed n-1 to acquire the phase of the transmission symbol indexed n.

4. The method as claimed in claim 2, wherein the amplitude of the transmission symbol indexed n satisfies,

   the amplitude of the transmission symbol indexed n is identical to the amplitude of the transmission symbol indexed n-1, in response to the one bit for determining the amplitude of the transmission symbol indexed n having a first preset value; and
   the amplitude of the transmission symbol indexed n is different from the amplitude of the transmission symbol indexed n-1, in response to the one bit for determining the amplitude of the transmission symbol indexed n having a second preset value; and

wherein, two types of amplitudes of the transmission symbols are provided.

5. The method as claimed in claim 3, further comprising, determining a mapping relation between a sequence of M bits and $2^M$ real numbers; and

the mapping relation satisfies a principle that only one bit of nearest two groups of bit sequences of M bits corresponding to two real numbers changes.

6. The method as claimed in claim 1, wherein, the amplitudes of the transmission symbols comprise a first amplitude, and a second amplitude that is lower than the first amplitude; and

the amplitude of the reference symbol is the first amplitude.

7. The method as claimed in claim 1, wherein, bits for determining transmission symbols are provided in form of a plurality of sets each comprising (M+1)*N bits, and each set corresponds to one reference symbol; and

the reference symbol of each set is identical or different from each other.

8. The method as claimed in claim 2, wherein a first set of M bits for determination of the phase of the transmission symbols indexed odd numbers and a first corresponding real number satisfy a first mapping relationship; while a second set of M bits for determination of the phase of the transmission symbols indexed even numbers and a second corresponding real number satisfy a second mapping relationship.

9. The method as claimed in claim 1, wherein, the reference symbol is a symbol with a preset amplitude and a preset phase, or

the phase of the reference symbol is preset, and the amplitude of the reference symbol is determined according to one bit.

10. A method for symbol reception, comprising,

receiving N+1 transmission symbols of $S_0$, $S_1$, $s_2$ ,...., $s_N$ , wherein 0, 1, 2,.., N denote indices of the transmission symbols, $s_0$ is the reference symbol; the transmission symbol indexed n is determined according to an amplitude and a phase of the transmission symbol indexed n-1 and M+1 bits; and M is an integer greater than or equal to 1, N is an integer greater than or equal to 1, $1 \leq n \leq N$, n is an integer; and

demodulating the N+1 transmission symbols to acquire (M+1)*N bits.

11. The method as claimed in claim 10, wherein, demodulating the N+1 transmission symbols to acquire (M+1)*N bits comprises,

determining M bits according to a phase of the transmission symbol indexed n and the phase of the transmission symbol indexed n-1; and

determining one bit according to an amplitude of the transmission symbol indexed n and the amplitude of the transmission symbol indexed n-1.

12. The method as claimed in claim 11, wherein determining the M bits according to the phase of the transmission symbol indexed n and the phase of the transmission symbol indexed n-1, comprises,

determining a real number according to a difference in the phase of the transmission symbol indexed n with respect to the phase of the transmission symbol indexed n-1; and

determining the M bits corresponding to the real number.

13. The method as claimed in claim 11, wherein determining the one bit according to the amplitude of the transmission symbol indexed n and the amplitude of the transmission symbol indexed n-1, comprises,

determining a value of the one bit as being a first preset value, in response to a ratio of the amplitude of the transmission symbol indexed n and the amplitude of the transmission symbol indexed n-1 being one; and

determining the value of the one bit as being a second preset value, in response to the ratio of the amplitude of the transmission symbol indexed n and the amplitude of the transmission symbol indexed n-1 being non-one.

**14.** The method as claimed in claim 12, further comprising, determining a mapping relation between a sequence of M bits and $2^M$ real numbers; and
the mapping relation satisfies a principle that only one bit of nearest two groups of bit sequences of M bits corresponding to two real numbers changes.

**15.** A method for symbol transmission, comprising,

determining a transmission symbol, wherein at least one transmission symbol indexed n is determined according to an amplitude and a phase of a transmission symbol indexed non n, and M+1 bits; wherein M is an integer greater than or equal to 1, N is an integer greater than or equal to 1, and n is an integer; and
transmitting the transmission symbol.

**16.** The method as claimed in claim 15, wherein, the transmission symbol indexed non n is one of, a reference symbol, or a transmission symbol indexed n-1; wherein n is a positive integer.

**17.** The method as claimed in claim 15, wherein a phase of the at least one transmission symbol indexed n is determined according to both the phase of the transmission symbol indexed non n, and M bits; and
an amplitude of the transmission symbol indexed n is determined according to both the amplitude of the transmission symbol indexed non-n, and one bit.

**18.** The method as claimed in claim 17, wherein, the phase of the at least one transmission symbol indexed n is acquired by a sum of the phase of the transmission symbol indexed non n, and a real number, and the real number is generated according to the M bits.

**19.** The method as claimed in claim 18, further comprising,

determining a mapping relation between M bits and $2^M$ real numbers; wherein,
the mapping relation satisfies a principle that only one bit of nearest two groups of bit sequences of M bits corresponding to two real numbers changes.

**20.** The method as claimed in claim 17, wherein, the amplitude of the transmission symbol indexed n is determined as being identical with the amplitude of the transmission symbol indexed non-n, in response to a value of the one bit being a first preset value; and the amplitude of the transmission symbol indexed n is determined as being different from the amplitude of the transmission symbol indexed non-n, in response to the value of the one bit being a second preset value; and
wherein, two types of amplitudes of the transmission symbols are provided.

**21.** The method as claimed in claim 15, wherein determining the transmission symbol comprises,
determining, N+1 transmission symbols of $S_0$, $S_1$, $S_2$,..., $S_N$ according to a reference symbol and (M+1)*N bits, wherein 0, 1, 2,.., N denote indices of the transmission symbols, $S_0$ is the reference symbol; a transmission symbol indexed n is determined according to amplitude and a phase of a transmission symbol indexed n-1, and M+1 bits; and $1 \leq n \leq N$, n is an integer.

**22.** The method as claimed in claim 17, wherein a first set of M bits for determination of the phase of the transmission symbols indexed odd numbers and the corresponding real number satisfy a first mapping relationship; while a second set of M bits for determination of the phase of the transmission symbols indexed even numbers and the corresponding real number satisfy a second mapping relationship.

**23.** A method for symbol reception, comprising,

receiving a transmission symbol, wherein at least one transmission symbol indexed n is determined according to an amplitude and a phase of a transmission symbol indexed non n, and M+1 bits; M is an integer greater than or equal to 1, N is an integer greater than or equal to 1, and n is an integer; and
demodulating the transmission symbol to acquire a plurality of bits for determining the transmission symbol, and the plurality of bits for determining the transmission symbol comprise the M+1 bits.

**24.** A transmitting apparatus, comprising a memory, a processor, and a computer program stored in the memory and executable by the processor which, when executed by the processor, causes the processor to carry out the method as claimed in any one of claims 1 to 9, or the method as claimed in any one of claims 15 to 21.

25. A receiving apparatus, comprising a memory, a processor, and a computer program stored in the memory and executable by the processor which, when executed by the processor, causes the processor to carry out the method as claimed in any one of claims 10 to 14, or the method as claimed in claim 23.

26. A computer-readable storage medium storing at least one computer program which, when executed by a processor, causes the processor to carry out the method as claimed in any one of claims 1 to 9, or the method as claimed in any one of claims 10 to 14, or the method as claimed in any one of claims 15-22, or the method as claimed in claim 23.

Determine N+1 transmission symbols of $S_0, S_1, S_2, ... S_N$, according to a reference symbol and $(M+1)*N$ bits, where 0, 1, 2,..., N denote indices of the transmission symbols, $S_0$ denotes the reference symbol, and the transmission symbol indexed n is determined according to the amplitude and the phase of the transmission symbol indexed n-1, and M+1 bits; and M is an integer greater than or equal to 1, N is an integer greater than or equal to 1, $1 \leq n \leq N$, n is an integer

110

Transmit the N+1 transmission symbols

120

FIG. 1

FIG. 2

FIG. 3

FIG. 4

Receive N+1 transmission symbols of $S_0, S_1, S_2, ... S_N$, where 0, 1, 2,.., N denote indices of the transmission symbols, $S_0$ denotes the reference symbol, and the transmission symbol indexed n is determined according to the amplitude and the phase of the transmission symbol indexed n-1, and M+1 bits; and M is an integer greater than or equal to 1, N is an integer greater than or equal to 1, $1 \leq n \leq N$, n is an integer

210

Transmit the N+1 transmission symbols

220

FIG. 5

Determine a transmission symbol, where at least one transmission symbol indexed n is determined according to the amplitude and the phase of transmission symbols indexed non n, and M+1 bits, M is an integer greater than or equal to 1, N is an integer greater than or equal to 1, and n is an integer

310

Transmit the transmission symbol

320

FIG. 6

Receive a transmission symbol, where at least one transmission symbol indexed n is determined according to the amplitude and the phase of transmission symbols indexed non n, and M+1 bits, where M is an integer greater than or equal to 1, N is an integer greater than or equal to 1, 1 ≤ n ≤ N, and n is an integer ⌇410

Demodulate the transmission symbol to obtain a plurality of bits for determining the transmission symbol including the M+1 bits ⌇420

FIG. 7

510

520

First Symbol Determination Module

First Transmission Module

FIG. 8

610

620

First Receiving Module

First Demodulation Module

FIG. 9

710

720

```
┌─────────────────┐        ┌─────────────────┐
│     Second      │        │                 │
│     Symbol      │        │     Second      │
│  Determination  │────────│  Transmission   │
│     Module      │        │     Module      │
│                 │        │                 │
└─────────────────┘        └─────────────────┘
```

FIG. 10

810

820

```
┌─────────────────┐        ┌─────────────────┐
│                 │        │                 │
│     Second      │        │     Second      │
│    Receiving    │────────│  Demodulation   │
│     Module      │        │     Module      │
│                 │        │                 │
└─────────────────┘        └─────────────────┘
```

FIG. 11

Memory 92

Input Device 94

Communication Device 93

Output Device 95

Processor 91

FIG. 12

Memory 20

Input Device 40

Communication Device 30

Output Device 50

Processor 10

FIG. 13

## INTERNATIONAL SEARCH REPORT

| | International application No. |
|---|---|
| | **PCT/CN2022/086145** |

| **A. CLASSIFICATION OF SUBJECT MATTER** |
|---|
| H04L 25/02(2006.01)i |
| According to International Patent Classification (IPC) or to both national classification and IPC |

| **B. FIELDS SEARCHED** |
|---|
| Minimum documentation searched (classification system followed by classification symbols) |
| H04L |
| Documentation searched other than minimum documentation to the extent that such documents are included in the fields searched |
| Electronic data base consulted during the international search (name of data base and, where practicable, search terms used) |
| CNABS; CNTXT; VEN; USTXT; WOTXT; EPTXT; 3GPP; IEEE; CNKI: 参考, 符号, 幅度, 幅值, 振幅, 相位, 差, 调制, 解调, 格雷, 映射, reference, symbol, amplitude, phase, difference, differential, modulation, demodulation, gray, map |

| **C. DOCUMENTS CONSIDERED TO BE RELEVANT** | | |
|---|---|---|
| Category* | Citation of document, with indication, where appropriate, of the relevant passages | Relevant to claim No. |
| X | KANTHIMATHI M. et al. "Reduced complexity maximum likelihood detection for DAPSK based relay communication systems" *2015 International Conference on Computing and Communications Technologies (ICCCT)*, 08 October 2015 (2015-10-08), sections 2-5, and figures 1-3 | 1-9, 15-22, 24, 26 |
| X | US 6115435 A (ADVANCED DIGITAL TELEVISION BROADCASTING LABORATORY et al.) 05 September 2000 (2000-09-05) description, columns 3-8 and figures 1-15 | 10-14, 23, 25, 26 |
| X | CN 102427387 A (BEIJING UNIVERSITY OF POSTS AND TELECOMMUNICATIONS) 25 April 2012 (2012-04-25) description, paragraphs 48-109 and figures 1-20 | 1-9, 15-22, 24, 26 |
| X | 殷敬伟 等 (YIN, Jingwei et al.). "基于MDAPSK的OFDM水声通信研究 (Research on OFDM Underwater Communication based on MDAPSK)" *华中科技大学学报 (自然科学版) (Journal of Huazhong University of Science and Technology (Natural Science Edition))*, Vol. 41, No. 3, 31 March 2013 (2013-03-31), sections 1-2, and figures 1-8 | 1-9, 15-22, 24, 26 |
| A | CN 102647392 A (ZTE CORP.) 22 August 2012 (2012-08-22) entire document | 1-26 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 May 2022** | **20 June 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/086145**

| Patent document cited in search report | | | Publication date (day/month/year) | Patent family member(s) | | | Publication date (day/month/year) |
|---|---|---|---|---|---|---|---|
| US | 6115435 | A | 05 September 2000 | CA | 2219731 | A1 | 30 April 1998 |
| | | | | EP | 0840483 | A2 | 06 May 1998 |
| | | | | JP | H10136046 | A | 22 May 1998 |
| | | | | KR | 19980033292 | A | 25 July 1998 |
| | | | | JP | 2978792 | B2 | 15 November 1999 |
| | | | | EP | 0840483 | A3 | 10 May 2000 |
| | | | | KR | 266122 | B1 | 15 September 2000 |
| CN | 102427387 | A | 25 April 2012 | None | | | |
| CN | 102647392 | A | 22 August 2012 | WO | 2013078855 | A1 | 06 June 2013 |

Form PCT/ISA/210 (patent family annex) (January 2015)

## REFERENCES CITED IN THE DESCRIPTION

**Patent documents cited in the description**

- CN 202110397056